# EUROPÄISCHE PATENTANMELDUNG

(11) **EP 2 006 507 A1**
(43) Veröffentlichungstag der Anmeldung: **24.12.2008**
(21) Anmeldenummer: 07110902.9
(22) Anmeldetag: 22.06.2007
(51) Int. Cl.: F02B 37/007, F02B 37/04, F02B 37/14

(54) **Regelung eines Aufladesystems für Brennkraftmaschinen**

(71) Anmelder: ABB Turbo Systems AG, 5400 Baden (CH)
(72) Erfinder: Brand, Daniel, 5200 Brugg (CH); Neuenschwander, Peter, 8006 Zürich (CH)
(74) Vertreter: ABB Patent Attorneys

(57) **Zusammenfassung**

Das Aufladesystem für eine Brennkraftmaschine umfasst mehrere parallel zueinander geschaltete Abgasturbolader. Einer der Abgasturbolader verfügt über eine verstellbare Turbine-Leitgeometrie und ist mit einem elektrischen Motor/Generator verbunden. Es ergeben sich zwei Regelstrecken, wobei die erste Regelstrecke den Motor/Generator und die zweite Regelstrecke die verstellbare Leitgeometrie regelt. Mit einer der beiden Regelstrecken wird ein Referenzbetriebspunkt des einen Abgasturboladers eingestellt und mit der zweiten Regelstrecke wird der Betriebspunkt dieses Abgasturboladers demjenigen der anderen Abgasturbolader angenähert oder angeglichen.

## Beschreibung

### Technisches Gebiet

Die Erfindung bezieht sich auf das Gebiet der mittels Abgasturboladern aufgeladenen Brennkraftmaschinen. Sie betrifft die Regelung eines Aufladesystem für eine Brennkraftmaschine mit mehreren Abgasturboladern.

### Stand der Technik

Auf grossen 2- oder 4-Takt Motoren können mehrere Abgasturbolader oder Abgasturboladergruppen - also in Serie geschaltete Niederdruck- und Hochdruck-Abgasturbolader, wobei mehrere Niederdruck-Abgasturbolader in einen gemeinsamen Hochdruck-Abgasturbolader fördern oder mehrere Hochdruck-Abgasturbolader von einem Niederdruck-Abgasturbolader gespiesen werden können - im Parallelbetrieb eingesetzt werden. Die Verdichter der mehreren Abgasturbolader fördern die Verdichter Luft in der Regel in einen gemeinsamen Luftreceiver

Abweichungen in der technischen Ausrüstung, der Baugrösse oder der Performance der einzelnen Abgasturbolader können im stationären oder im transienten Betrieb zu unterschiedlichen Betriebszuständen der Abgasturbolader führen. Die unterschiedlichen Betriebszustände können für einzelne Abgasturbolader zu unzulässigen Belastungen, beispielsweise durch Pumpen oder durch zu hohe Drehzahlen, führen.

Bei der Aufladung von Brennkraftmaschinen mit mehreren Abgasturboladern oder Abgasturboladergruppen, welche in einen gemeinsamen Luftreceiver fördern kommt es zu Abweichungen der Betriebspunkte der einzelnen Abgasturbolader durch
a) ungleiche technische Ausrüstung der Abgasturbolader, und die sich daraus ergebenden ungleichen Belastungen
b) durch ungleiche Spezifikation, Baugrösse der Abgasturbolader,
c) durch ungleiche Leistungsdaten der Abgasturbolader oder
d) durch sich aus unterschiedlichen Anbausituationen ergebenden Anströmungs-und Temperaturbedingungen.

Um solche ungleiche Betriebszustände der einzelnen Abgasturbolader zu vermeiden, werden heute auf einem Motor in der Regel baugleiche Abgasturbolader eingesetzt.

### Kurze Darstellung der Erfindung

Um entweder das Teillastverhalten oder das transiente Verhalten des Systems Motor und Abgasturbolader zu verbessern oder eine Energieauskopplung bei Volllast zu ermöglichen, können die Abgasturbolader mit einer elektrischen Maschine, einer Abgasturbine mit variabler Geometrie (VTG), mit einer Verdichterumblasung, mit einem verstellbaren Verdichtervorrad (VCG - variable Verdichtergeometrie) oder mit einer Kombination davon ausgerüstet werden. Bei mehreren parallel arbeitenden Abgasturboladern ist es in bestimmten Anwendungsfällen vorteilhaft, nur einen oder einzelne Abgasturbolader mit den oben erwähnten Zusatzeinrichtungen auszurüsten.

Die erfindungsgemässe Regelung korrigiert die Abweichungen der Betriebszustände, kompensiert Störungen die von aussen auf einzelne Abgasturbolader einwirken und berücksichtigt die sich durch den Betrieb oder die Anbausituation ergebenden Performanceunterschiede.

Die erfindungsgemässe Regelung erlaubt nun, die Zusatzeinrichtungen so anzusteuern, dass ein unerwünschtes Auseinanderdriften der Betriebspunkte der verschiedenen, parallel zueinander betriebenen Abgasturbolader verhindert wird. Die Regelung soll die Betriebspunkte der einzelnen Abgasturbolader einander annähern oder angleichen, soll Störungen und Leistungsbeeinträchtigungen der Abgasturbolader kompensieren und gegebenenfalls einen erwünschten Betriebspunkt einstellen.

### Kurze Beschreibung der Zeichnungen

Nachfolgend wird die erfindungsgemässe Regelung anhand von Zeichnungen detailliert erläutert. Hierbei zeigt
- Fig. 1: ein Aufladesystem mit mehreren Abgasturboladern, wovon einer mit einer elektrischen Maschine verbunden und mit einer verstellbaren Turbinenleitgeometrie ausgestattet ist,
- Fig. 2: ein Signalflussbild der erfindungsgemässen Regelung, und
- Fig. 3: ein Aufladesystem mit mehreren Abgasturboladern, wovon einer mit einer elektrischen Maschine verbunden ist und die übrigen mit einer verstellbaren Turbinenleitgeometrie ausgestattet sind.

### Weg zur Ausführung der Erfindung

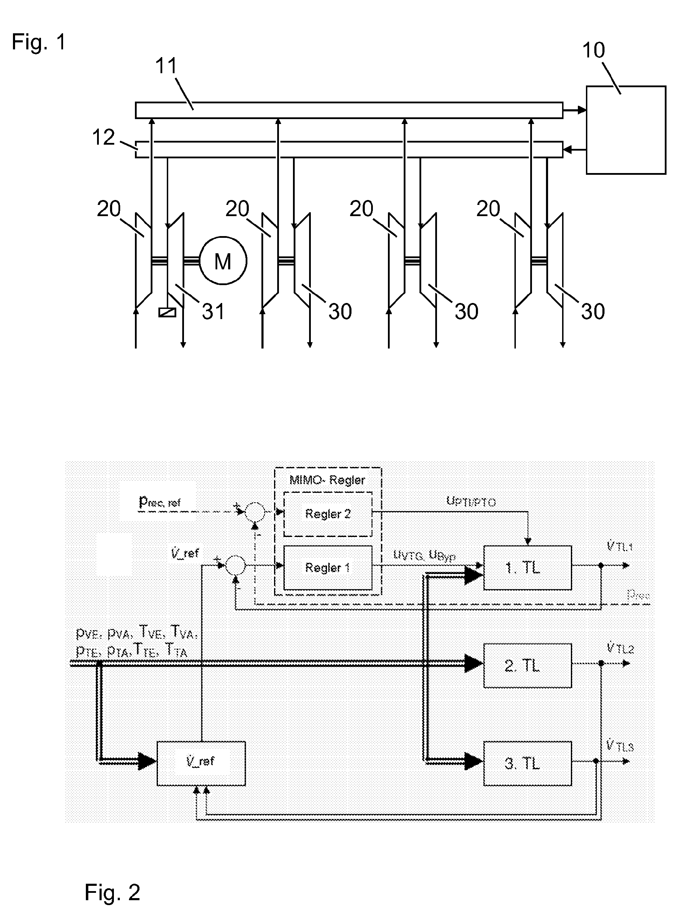

Fig. 1 zeigt ein Aufladesystem für eine Brennkraftmaschine 10 mit vier Abgasturboladern. Jeder der Abgasturbolader umfasst einen Verdichter 20 sowie eine Abgasturbine. In den Figuren wird bei den Abgasturbinen unterschieden zwischen den herkömmlichen Abgasturbinen 30 und den mit verstellbarer Leitgeometrie ausgestatteten Abgasturbinen 31. Ein erster Abgasturbolader ist mit einer elektrischen Maschine (Motor/ Generator) verbunden, womit die Abgasturboladerwelle entweder beschleunigt oder gebremst werden kann. Beim Beschleunigen muss elektrische Energie aufgewendet werden, beim Abbremsen kann elektrische Energie gewonnen werden. Anstelle einer elektrischen Maschine können auch hydraulische, pneumatische oder mechanische Antriebe/Abtriebe eingesetzt werden. Dies gilt analog auch für die weiteren Ausführungsformen. Zusätzlich ist derselbe Abgasturbolader mit einer Abgasturbine 31 mit verstellbarer Leitgeometrie ausgestattet. Die übrigen Abgasturbolader sind ohne Zusatzausrüstung (elektrische Maschine, verstellbare Turbinen-Leitgeometrie) ausgestattet.

Die Motorsteuerung regelt oder steuert die Leistung der elektrischen Maschine so, dass entweder elektrische Energie gewonnen wird unter Einhaltung einer unteren Grenze für den Druck im Luftreceiver oder es wird der Abgasturbolader angetrieben, so dass sich ein gewünschter Druck im Luftreceiver einstellt. Durch die Eingriffe der Motorsteuerung wird der Betriebspunkt des mit der elektrischen Maschine ausgestatteten Abgasturboladers möglicherweise unzulässig verändert.

In einer ersten Ausführungsform greift die erfindungsgemässe Regelung mit dem Regler 1 gemäss Fig. 2 eine für den Betriebspunkt repräsentative Grösse des Abgasturboladers, z.B. den Volumenstrom (*V̇*_{ref}) oder die Drehzahl, bei den Abgasturboladern ohne Zusatzausrüstung (2. TL und 3. TL) ab, und stellt über einen Aktuator die Stellung der Turbinenleitschaufeln (u_{VTG}) des Abgasturboladers mit elektrischer Maschine und verstellbarer Turbinen-Leitgeometrie (1. TL) so, dass für diesen Abgasturbolader derselbe Betriebspunkt resultiert wie für die übrigen Abgasturbolader ohne Zusatzausrüstung. Anstelle einer verstellbaren Turbinen-Leitgeometrie kann auch eine Verdichterumblasung (Bypass) mit einem verstellbaren Ventil oder einer Klappe eingesetzt werden (u_{Byp}). Der Soll-Betriebspunkt wird durch diejenigen Abgasturbolader vorgegeben, welche nicht mit verstellbarer Turbinen-Leitgeometrie ausgerüstet sind. Die Regelung kompensiert dabei Störungen, wie die unbekannte elektrische Leistung der elektrischen Maschine. Wird mindestens die Temperatur (T_{VA}) nach Verdichter gemessen, kann daraus ein Mass für den Verdichterwirkungsgrad bestimmt werden. Der Verdichterwirkungsgrad wird herangezogen, um den Soll-Betriebspunkt zu korrigieren, so dass die Regelung den Betriebspunkt des Verdichters nicht unnötigerweise in Richtung Pumpgrenze verschiebt. Ebenso können unterschiedliche geometrische Abmessungen, andere thermodynamischen Kenngrössen und weitere Messgrössen für die Korrektur des Soll-Betriebspunkts herangezogen werden.

In einer zweiten Ausführungsform umfasst die erfindungsgemässe Regelung zwei Regler. Einer der Regler (Regler 2) erhält von der Steuerung der Brennkraftmaschine ein Signal, das repräsentativ für einen erwünschten Betriebspunkt ist, beispielsweise der erwünschte Druck im Luftreceiver (p_{rec,ref}). Dieser Regler bestimmt die Leistung der elektrischen Maschine (U_{PTI/PTO}) so, dass sich der erwünschte Druck im Luftreceiver einstellt. Ein weiterer Regler (Regler 1) übernimmt, wie in der ersten Ausführungsform beschrieben, die Regelung des Gleichlaufs der mehreren Abgasturbolader untereinander. Die zwei Regler können unabhängig voneinander operieren oder als Kaskadenregler hintereinander geschaltet werden, wobei gleichgültig ist, welcher Regler die äusser bzw. innere Kaskade darstellt. Die Regler sind genügend robust auszuführen, da sie sich im Betrieb gegenseitig beeinflussen werden. Optional könne die beiden Regler auch in einem sogenannten MIMO-Regler (multiple input multiple output) vereint werden. Dabei wird die gegenseitige Beeinflussung direkt im Regler durch geeignete Auslegung berücksichtigt und die Stabilität des Regelsystems wird nicht nachteilig beeinflusst.

Die beiden Regler können auch derart vertauscht werden, dass der erwünschte Betriebspunkt durch Regelung der verstellbaren Turbinen-Leitvorrichtung eingestellt wird. Die zweite Regelung wirkt auf die Leistung der elektrischen Maschine mit dem Ziel, durch gezielte Zugabe/ Entnahme von elektrischer Leistung die Betriebszustände der einzelnen Abgasturbolader untereinander anzugleichen.

Die repräsentative Grösse für den einzustellenden Betriebspunkt kann ausser dem Luftreceiverdruck auch die Leistung der elektrischen Maschine, die Flächen der Turbinen-Leitgeometrie oder das Spüldruckgefälle über dem Motor sein.

Im Laufe des Betriebes kann sich der Wirkungsgrad der Verdichter der einzelnen Abgasturbolader unterschiedlich ändern. Bei parallel betriebenen Abgasturboladern mit gemeinsamem Luftreceiver hat eine Wirkungsgradabsenkung am Verdichter eines Abgasturboladers eine Erhöhung der Drehzahl und eine Absenkung des Volumenstromes des betreffenden Verdichters zur Folge. Durch Messung der Temperaturen jeweils nach dem Verdichter (und optional weiterer Grössen) kann eine Änderung des Wirkungsgrades festgestellt werden. Die aus den Messsignalen berechnete Änderung des Verdichterwirkungsgrades dient dazu, einen korrigierten Soll-Betriebspunkt des Abgasturboladers zu bestimmen. Die Regelung übernimmt dann die Aufgabe, zu verhindern, dass der Betriebspunkt des betroffenen Verdichters sich in unerwünschter Weise von seinem Soll-Betriebspunkt entfernt.

Bei einer geeigneten Auswahl von Messgrössen kann der Wirkungsgrad der Abgasturbolader für jeden oder einzelne der Abgasturbolader bestimmt werden. Es kann dann eine Regelung realisiert werden, die den absoluten Betriebspunkt der Abgasturbolader einstellt, wobei hierfür pro Abgasturbolader ein Reglerpfad vorzusehen ist.

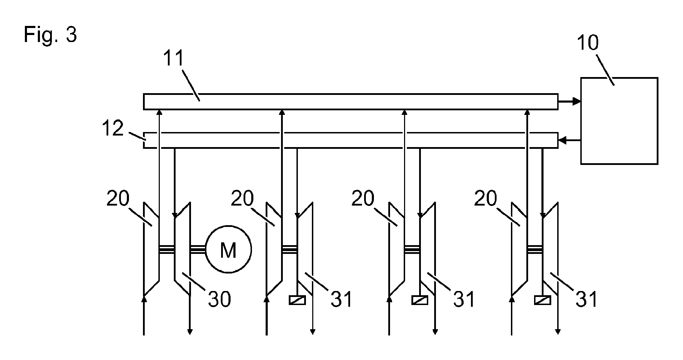

Fig. 3 zeigt ein zweites Aufladesystem für eine Brennkraftmaschine 10 mit wiederum vier Abgasturboladern. Jeder der Abgasturbolader umfasst einen Verdichter 20 sowie eine Abgasturbine. Wiederum ist ein erster Abgasturbolader mit einer elektrischen Maschine verbunden. In diesem Aufladesystem weist jedoch nicht die Abgasturbine des mit der elektrischen Maschine verbundenen Abgasturboladers eine verstellbare Leitgeometrie auf, sondern die Abgasturbinen aller übrigen Abgasturbolader.

Der Betriebspunkt des ersten Abgasturboladers, welcher an die elektrische Maschine gekuppelt ist, kann in Abhängigkeit des Verbrennungsmotorbetriebspunktes und weiterer Parameter wie Umwelt, Motor- oder Abgasturbolader-Verschmutzung, Strombedarf der Bezüger und Stromproduktion anderer Erzeuger oder Stromzufuhr in Abhängigkeit des Bedarfs der übrigen Bezüger und der Leistung der Erzeuger durch das Abtriebs- oder Antriebsmoment dieser Maschine gesteuert respektive geregelt werden.

Damit die übrigen, an keine elektrische Maschine gekuppelten Abgasturbolader im gewünschten Betriebspunkt laufen, wird die Turbinenfläche der mit verstellbarer Leitgeometrie ausgerüsteten Abgasturbinen so verkleinert oder vergrössert, dass diese Abgasturbolader einen bestimmten Betriebspunkt erreichen. Optional kann dadurch der Betriebspunkt der übrigen Abgasturbolader demjenigen des Abgasturboladers, welcher mit der elektrischen Maschine gekuppelt ist, angeglichen werden. Als Alternative ist es auch möglich, die Turbinenfläche in Abhängigkeit des Betriebspunktes des Verbrennungsmotors etc. vorzugeben und den Abgasturbolader, welcher an eine elektrische Maschine gekoppelt ist, über das Abtriebs- oder Antriebsmoment dieser Maschine zu steuern respektive zu regeln.

Die erfindungsgemässe Regelung kann auch auf Aufladesystem angewandt werden, welche aus zwei Gruppen von in sich thermodynamisch ähnlich konfigurierten Abgasturboladern besteht. Alle Abgasturbolader arbeiten parallel. Die Abgasturbolader der ersten Gruppe sind entweder mit je einer elektrischen Maschine und einer verstellbaren Turbinen-Leitvorrichtung oder aber nur mit je einer elektrischen Maschine ausgerüstet. Im zweiten Falle sind die Abgasturbolader der zweiten Gruppe alle je mit einer verstellbaren Turbinen-Leitvorrichtung ausgerüstet.

Die Regelung kann auch auf Aufladesysteme angewendet werden, welche keine elektrische Maschine einsetzen aber ein oder mehrere Abgasturbolader mit verstellbarer Turbinen-Leitvorrichtung ausgerüstet sind. Ebenso ist der Fall einzubeziehen, wo ein Abgasturbolader mit elektrischer Maschine und verstellbarer Turbinen-Leitvorrichtung ausgerüstet ist und alle andern Abgasturbolader nur mit verstellbarer Turbinen-Leitvorrichtung. Die Abgasturbolader können von verschiedener Grösse sein.

Bei der 2-stufigen Aufladung kann eine der parallel arbeitenden Hochdruckstufen mit einer elektrischen Maschine und verstellbarer Turbinen-Leitvorrichtung ausgestattet werden oder wie in der ersten Ausführungsform eine Hochdruckstufe mit einer elektrischen Maschine und alle andern Hochdruckstufen mit verstellbarer Turbinen-Leitvorrichtung ausgerüstet werden. Die Regelung wird dann analog der 1-stufigen Aufladung auf die Hochdruckstufen der 2-stufigen Aufladung angewendet.

In einer weiteren Ausführungsform wird ein Aufladesystem Registeraufladung eingesetzt. In diesem Fall sind die Abgasturbolader typischerweise von unterschiedlicher Grösse und können einzeln zu oder weggeschaltet werden. Die Regelung hat insbesondere während transienten Betriebsphasen die Aufgabe, das unterschiedliche Beschleunigungsverhalten der Abgasturbolader zu kompensieren.

### Bezugszeichenliste

- 10: Brennkraftmaschine
- 11: Luftreceiver
- 12: Abgasreceiver
- 20: Verdichter
- 30: Turbine
- 31: Turbine mit verstellbarer Leitgeometrie
- M: Elektrische Maschine (Motor/Generator)

## Patentansprüche

1. Regelung für ein Aufladesystem für eine Brennkraftmaschine mit mehreren parallel zueinander geschalteten Abgasturboladern, wobei mindestens einer der Abgasturboladern über eine Turbine mit verstellbarer Leitgeometrie verfügt und bei welchem entweder der mindestens eine Abgasturbolader mit der Turbine mit verstellbarer Leitgeometrie mit einem zusätzlichen Antrieb/Abtrieb verbunden ist, oder wenigstens ein Abgasturbolader mit einem zusätzlichen Antrieb/Abtrieb verbunden ist und die übrigen Abgasturboladern jeweils eine Turbine mit verstellbarer Leitgeometrie umfassen, so dass sich zwei Regelstrecken ergeben, wobei die erste Regelstrecke den mindestens einen zusätzlichen Antrieb/Abtrieb und die zweite Regelstrecke die mindestens eine verstellbare Leitgeometrie regelt oder steuert, wobei mit einer der beiden Regelstrecken ein Referenzbetriebspunkt der entsprechenden Abgasturbolader eingestellt und mit der zweiten Regelstrecke die Betriebspunkte aller Abgasturbolader einander angenähert oder angeglichen werden.

2. Regelung eines Aufladesystem für eine Brennkraftmaschine mit mehreren parallel zueinander geschalteten Abgasturboladern, wobei mindestens einer der Abgasturboladern über eine Turbine mit verstellbarer Leitgeometrie verfügt, wobei der Betriebspunkt des Abgasturboladers mit der Turbine mit der verstellbaren Leitgeometrie in Abhängigkeit einer Kenngrösse mindestens eines der anderen Abgasturboladern eingestellt wird, wobei die Einstellung über die verstellbare Leitgeometrie erfolgt.

3. Regelung nach einem der vorangehenden Ansprüche, wobei anstelle einer Turbine mit verstellbarer Leitgeometrie die entsprechenden Abgasturbolader mit einer verstellbaren Verdichtergeometrie oder einer regulierbaren Verdichterumblasung ausgestattet sind und die entsprechende Regelung durch Verstellend er Verdichtergeometrie oder Regulieren der Verdichterumblasung erfolgt.
